# EUROPEAN PATENT APPLICATION

(11) **EP 1 713 191 A1**
(43) Date of publication of application: **18.10.2006**
(21) Application number: 05290805.0
(22) Date of filing: 11.04.2005
(51) Int. Cl.: H04B 10/17, G02F 1/35

(54) **Regenerator for 2R regeneration of an optical WDM signal**

(71) Applicant: ALCATEL, 75008 Paris (FR)
(72) Inventor: Secuineau, Frederic, 75008 Paris (FR); Lavigne, Bruno, 92160 Antony (FR)
(74) Representative: Kohler Schmid Möbus

(57) **Abstract**

A regenerator for 2R regeneration of an optical WDM signal (5) comprises a NOLM (1') with an optical coupler (2) for coupling counterpropagating pulses of the WDM signal (5) to a WDM processing unit (7) of the NOLM (1'). The WDM processing unit (7) comprises a demultiplexer (8a) for feeding the channels of the WDM input signal (5a) into separate paths (9a, 9b), each path (9a, 9b) comprising a nonlinear element (10a, 10b), and a multiplexer (8b) for joining the paths (9a, 9b) to form the WDM output signal (5b). The regenerator is capable of regenerating a plurality of wavelength channels of the WDM signal (5) simultaneously.

## Description

### Background of the invention

The invention relates to a regenerator for 2R regeneration of an optical WDM signal.

Ultra-long-haul wavelength division multiplexing (WDM) optical transmissions at high bit-rates suffer from severe impairments occurring during propagation originating from noise accumulation or non-linear propagation effects. Various strategies have been investigated as to fight against these effects using new and exotic modulation formats (DPSK, RZ-DPSK, PSBT...) or as to suppress them using periodic regeneration. In the second case, modulation formats are quite conservative and well-known since long, such as the non-return-to-zero (NRZ) or return-to-zero (RZ) modulation formats.

As to minimize the regenerator complexity, 2R regeneration (for Re-amplification and Re-shaping) appears as the most attractive, avoiding the use of power consuming clock recovery circuitries. In that respect, optical 2R regeneration using a Saturable Absorber (SA) has already been demonstrated at 20 Gbit/s and 40 Gbit/s with the RZ-on/off-keying (OOK) modulation format. This scheme allows a strong improvement in propagation distance and/or increase in system margin. Also, optical 2R regeneration using an ultra-fast nonlinear optical loop mirror (Sagnac based interferometer) has demonstrated its efficiency when used with RZ data.

However, all the solutions for regeneration proposed so far suffer from the single wavelength operation. In a WDM environment, it is then required to de-multiplex the incoming data stream, to regenerate every channel independently using a regenerator per channel, and to recombine them before launching them into the following transmission section.

A SA-based regenerator, for example, does not perform any optical power control for "1" or mark levels due to the shape of its transmittance or transmission function T where Pₒᵤₜ=T x Pᵢₙ. It is then required to combine the SA with other elements such as a narrowband optical filter and a nonlinear fiber to provide an efficient amplitude control of the incoming "1". This additional stage operating according to a single channel basis prevents from WDM regeneration with SA regenerators.

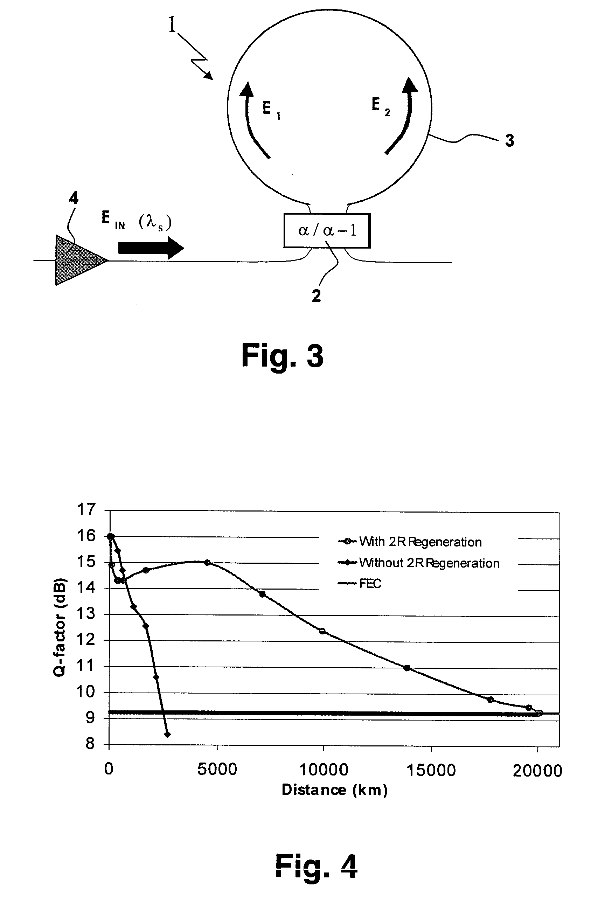

Likewise, conventional nonlinear optical loop mirror (NOLM) regenerators are incompatible with WDM signal processing, as will be explained below with reference to **Fig. 3,** which displays the structure of such a conventional 2R regenerator being used for regeneration of an optical signal with a single wavelength λs. The regenerator comprises a NOLM **1** with an optical coupler **2** and a highly non-linear (HNL) fiber **3.** An incoming pulse of the optical signal to be regenerated with an electrical field strength Eᵢₙ is split by the coupler 2 into two pulses with field strengths E₁, E₂ propagating in counter direction within the HNL fiber 3. The coupler 2 has a coupling ratio a (0< α < 1) specifying the ratio of the optical power P₁ = |E₁|² of the first pulse with respect to the optical power Pᵢₙ= |Eᵢₙ|² of the incoming pulse, i.e. P₁ = α Pᵢₙ, the remaining optical power P₂= (1-α) Pᵢₙ being attributed to the second pulse. According to their optical power levels, the two pulses gather different nonlinear phase shifts introduced by self phase modulation (SPM) in the HNL fiber before they interfere at the coupler 2. The SPM is due to the strongly enhanced Kerr effect in the HNL fiber 3. An asymmetric nature of the power levels induced by the coupler 2 (α ≠ 50 %) allows for a fine control of the amount of phase difference through a control of the peak power launched in each arm, being achieved through an Erbium-doped fiber amplifier (EDFA) **4** placed in front of the NOLM 1.

Regeneration effects of a NOLM-based 2R regenerator with the structure shown in Fig. 3 were demonstrated and assessed in [2], [3]. As an example of achieved results, **Fig. 4** shows the Q-factor in dependence of the transmission distance for transmission experiments performed at 43 Gbit/s with and without regeneration. When the 2R regenerator is implemented, the transmission distance is increased from 2,500 km to 20,000 km ( Q factor= 9.2 dB or a BER =2.10⁻³).

Despite the advantageous regeneration properties of the NOLM 1 for an optical signal with a single wavelength, it cannot be used for regenerating signals having more than one wavelength channel, because of the strong cross phase modulation generated inside the nonlinear fiber 3 of the NOLM 1. Therefore, if two wavelengths are launched simultaneously inside the standard NOLM 1, the induced cross interactions (cross phase modulation) between channels will impact on the phase difference between the counter-propagative pulses with electric field strengths E₁, E₂ belonging to the same channel.

### Object of the invention

It is the object of the invention to provide a 2R regenerator for a WDM optical signal which is capable of performing simultaneous regeneration of more than one wavelength channel.

### Short description of the invention

This object is achieved by a regenerator of the above-mentioned kind comprising a NOLM with an optical coupler for coupling counter-propagating pulses of the WDM signal to a WDM processing unit of the NOLM, wherein the WDM processing unit comprises a demultiplexer for feeding the channels of the WDM input signal to separate paths, each path comprising a nonlinear element, and a multiplexer for recombining the paths to form a WDM output signal.

The inventive concept presents a new scheme for a WDM optical 2R regenerator based on the use of a nonlinear optical loop mirror and compatible with the RZ data modulation format. The basic idea is consisting in separating, regenerating and recombining a WDM data stream within a unique NOLM interferometer. For this purpose, the different channels of the WDM signal are separated within the NOLM using a demultiplexer placed just after the coupler, then to use as many different paths as channels to induce a phase difference, and to use a multiplexer just before the coupler to recombine the channels. By separating the different channels, cross interactions can be avoided and the WDM signal can be regenerated within a single NOLM.

In a preferred embodiment each nonlinear element introduces a phase difference of π between the counter-propagating pulses of each channel, thus allowing for a highly effective regeneration of the WDM signal.

In a further preferred embodiment, the nonlinear element is a nonlinear fiber. When using a highly nonlinear fiber (HNL) as a nonlinear element, an insensitivity to timing-jitter accumulation is provided, as is demonstrated experimentally in [3].

In a highly preferred embodiment the nonlinear element is a semiconductor optical amplifier (SOA) or a nonlinear crystal. By using such components as nonlinear elements, a compact construction of the NOLM is possible.

In a further highly preferred embodiment, the WDM processing unit is formed by a wavelength selector. Wavelength selectors typically comprise a demultiplexer/multiplexer module and have a nonlinear element for each wavelength channel. In the present application, the nonlinear elements of the wavelength selector can be used to generate the phase shift between counter-propagating pulses. Consequently, a wavelength selector is ideally suited to be used as a WDM processing unit in the regenerator according to the invention. In addition, when the nonlinear medium is an active medium such as a SOA, one can control the phase shift through the SOA gain, i.e. the SOA current, without any additional amplification, conversely to what is described in Fig. 3 with respect to the standard NOLM 1, i.e. the EDFA amplifier 4 of Fig. 3 is not necessary in this case.

In a further preferred embodiment, the wavelength selector is of a monolithic integrated type.

It is advantageous when the NOLM is of a compact construction. With such a NOLM, polarization-insensitive operation (guaranteeing the same performance whatever the state of polarization of the incoming optical data signal) is possible.

In a further preferred embodiment, the coupler has a coupling ratio of the optical power of the counter-propagating pulses of the WDM signal being different from 50 %. An asymmetry of the optical power of the counter-propagating pulses is advantageous for adjusting the phase shift.

It is preferred when the modulation format of the WDM signal is the RZ-OOK format. In this case, highly efficient regeneration is possible (cf. Fig. 4).

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing, wherein
- Fig. 1: shows an embodiment of a 2R regenerator according to the invention with a NOLM having a WDM processing unit,
- Fig. 2: shows the embodiment of the 2R regenerator of Fig. 1 with a preferred embodiment of the WDM processing unit,
- Fig. 3: shows a state-of-the-art 2R regenerator with a NOLM,
- Fig. 4: shows the Q-factor in dependence of the transmission distance with and without making use of the regenerator shown in Fig. 3.

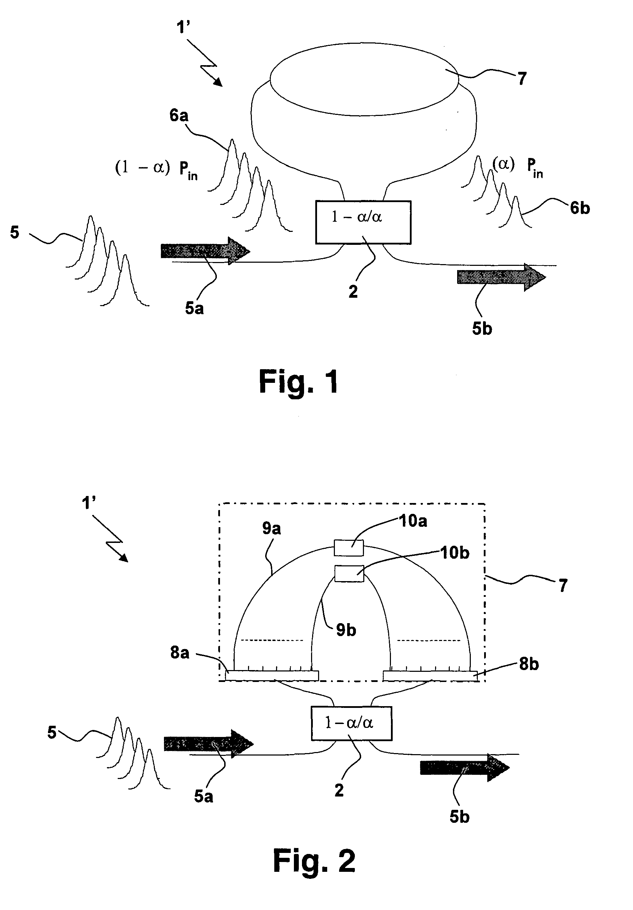

Fig. 1 shows a regenerator for 2R regeneration of an optical WDM signal **5** comprising a NOLM **1'** with an optical coupler 2 for coupling counter-propagating pulses **6a, 6b** of the WDM signal **5** to a WDM processing unit **7** of the NOLM 1'. The optical WDM signal 5 to be regenerated (WDM input signal **5a)** is provided as an input to the coupler 2, whereas the regenerated WDM signal (WDM output signal, **5b)** constitutes the output of the coupler 2. The NOLM 1' is based on the same functional principle as described in connection with Fig. 3, i.e. the power Pᵢₙ= |Eᵢₙ|² of the WDM input signal provided to the coupler 2 is distributed with a ratio α ≠ 50 % between the two counter-propagating pulses 6a, 6b.

However, in contrast to the NOLM 1 of Fig. 3, the NOLM 1' of Fig. 1 is capable of regenerating several wavelength channels of the WDM signal 5 simultaneously. For this purpose, the WDM processing unit 7 has to generate a phase difference of π between the counter-propagating pulses 6a, 6b of each individual wavelength channel without causing cross-channel interactions as is the case with the HNL fiber 3 of Fig. 3.

This requirement can be fulfilled by implementing the WDM processing unit 7 as a wavelength selector as shown in **Fig. 2.** The different channels of the first pulse 6a are fed to a demultiplexer **8a,** which separates the WDM input signal 5a into individual channels and feeds them into separated paths, two of which **(9a, 9b)** are shown in Fig. 2. The number of paths corresponds to the maximum number of channels of the WDM signal 5. Each of the paths 9a, 9b comprises a SOA as a nonlinear element **10a, 10b** for generating a phase difference of π between the first pulse 6a and the second pulse 6b. Finally, the channels of the first pulse 6a are recombined in a multiplexer **8b** before they leave the NOLM 1' via the coupler 2 in which the first pulse 6a interferes with the counter-propagating second pulse 6b to form the WDM output signal 6b.

The wavelength selector is well-suited for performing the function of the WDM processing unit 7. Namely, such a component is based on SOAs as nonlinear elements 10a, 10b. The SOAs being present in each path 9a, 9b can now be used for generating the phase change of π. Consequently, when simply associating the wavelength selector with the coupler 2, a WDM-NOLM is obtained. The monolithic integrated wavelength selector as a WDM processing unit 7 offers both the WDM dimension and the compactness, as the SOAs are compact nonlinear elements. In addition, because the nonlinear medium is an active medium, one can control the phase shift through the SOA gain, i.e. the SOA current, without any additional amplification conversely to what is described in Fig. 3 regarding the standard NOLM 1.

It is possible to replace the SOAs forming the nonlinear elements 9a, 9b by HNL fibers, or by nonlinear crystals etc. The NOLM 1' is suitable for being used with WDM signals of the RZ type, preferably with on/off-keying. Note however, that modifications of the standard NOLM 1 which allow for regeneration of signals with other modulation formats, e.g. the RZ-DPSK format, can be extended to WDM signals by using the principles outlined above.

In summary, by using the above approach, only one component is needed to realize WDM 2R regeneration. Also, a totally passive 2R regenerator can be used. Moreover, when using SOAs or photonic crystals as a nonlinear medium, a NOLM of a compact construction can be realized. In addition, the SOA-based approach with wavelength selector avoids the need of extra amplification.

### References

[1] S.Wong et al., "Self-switching of optical pulses in dispersion-imbalanced nonlinear loop mirrors" Optics Letters, Vol. 22, n°15, pp. 1150-1152 (1997)
[2] F. Seguineau, OFC'04
[3] F. Seguineau, ECOC'04

## Claims

1. Regenerator for 2R regeneration of an optical WDM signal (5) comprising a NOLM (1') with an optical coupler (2) for coupling counter-propagating pulses (6a, 6b) of the WDM signal (5) to a WDM processing unit (7) of the NOLM (1'), wherein the WDM processing unit (7) comprises:
a demultiplexer (8a) for feeding the channels of the WDM input signal (5a) into separate paths (9a, 9b), each path (9a, 9b) comprising a nonlinear element (10a, 10b),
and a multiplexer (8b) for joining the paths (9a, 9b) to form the WDM output signal (5b).

2. Regenerator according to claim 1, wherein each nonlinear element (10a, 10b) introduces a phase difference of π between the counter-propagating pulses (6a, 6b) of each channel.

3. Regenerator according to claim 1, wherein the nonlinear element is a nonlinear fiber.

4. Regenerator according to claim 1, wherein the nonlinear element (10a, 10b) is a semiconductor optical amplifier or a nonlinear crystal.

5. Regenerator according to claim 1, wherein the WDM processing unit (7) is formed by a wavelength selector.

6. Regenerator according to claim 5, wherein the wavelength selector is of a monolithic integrated type.

7. Regenerator according to claim 1, wherein the NOLM (1) is of compact construction.

8. Regenerator according to claim 1, wherein the coupler (2) has a coupling ratio (α) of the optical power of the counter-propagating pulses (6a, 6b) of the WDM signal (5) being different from 50 %.

9. Regenerator according to claim 1, wherein the modulation format of the WDM signal (5) is the RZ-OOK format.
